Europäisches Patentamt

European Patent Office

Office européen des brevets

(19)

(11)  **EP 1 324 849 B1**

(12)  **EUROPEAN PATENT SPECIFICATION**

(45) Date of publication and mention
of the grant of the patent:
**14.06.2006   Bulletin 2006/24**

(51) Int Cl.:
***B23D 31/00*** *(2006.01)*     ***B26D 7/08*** *(2006.01)*

(21) Application number: **00965697.6**

(22) Date of filing: **10.10.2000**

(86) International application number:
**PCT/CA2000/001173**

(87) International publication number:
**WO 2002/030603 (18.04.2002 Gazette 2002/16)**

(54) **PROCESS TO FRACTURE CONNECTING RODS**

VORRICHTUNG ZUM BRUCHTRENNEN VON STANGE UND DECKEL EINES PLEUELS

PROCEDE DE RUPTURE DE BIELLES

(84) Designated Contracting States:
**AT BE CH CY DE DK ES FI FR GB GR IE IT LI LU
MC NL PT SE**

(43) Date of publication of application:
**09.07.2003   Bulletin 2003/28**

(73) Proprietor: **Guirgis, Sameh
Windsor,
Ontario N8T 2Y6 (CA)**

(72) Inventors:
• **GUIRGIS, Sameh
Windsor, Ontario N8T 2Y6 (CA)**

• **BHATTACHARJEE, Sudip
Windsor, Ontario N9J 3A5 (CA)**

(74) Representative: **Pluckrose, Anthony William
BOULT WADE TENNANT,
Verulam Gardens
70 Gray's Inn Road
London WC1X 8BT (GB)**

(56) References cited:
**FR-A- 2 788 819          US-A- 5 320 013**

EP 1 324 849 B1

## Description

This invention relates to a process for fracturing connecting rods and the like.

<u>BACKGROUND OF THE INVENTION:</u>

**(I) PRIOR ART BACKGROUND**

Many methods have been used in fracturing connecting rods, that include:

(i) Passing an electron beam along a desired splitting plane as in U.S. Patent No 3,751,080.
(ii) Providing holes in the fracturing plane through which the fracturing force is introduced as in U.S. Patent No. 3,994,054
(iii) Using heat treatment or freezing to embrittle the fracture area as in U.S. Patent No. 4,768,694
(iv) Applying a static or an impulsive force acting perpendicular to the fracture plane as in U.S. Patent Nos. 4,860,419; 5,115,564; and 5,320,265.
(v) Actuating expanding mandrels using a wedge arrangement as in U.S. Patent No 5,503,317, forming the closest prior art.

However, most of the known methods for fracturing the connecting rods are based on the same principle: application of an "outward pressure" to the crank bore till the generated stresses are high enough to fracture the connecting rod. Some of these methods attempted to overcome the difficulty of fracturing such high strength material by reducing or weakening the cracking area, by using techniques, such as, the cryogenic cooling and the electron beam hardening, which have a deleterious effect on material performance.

Since connecting rods are made of high strength materials, the fracturing force is required to be of big magnitude. The use of big force has a negative effect on the quality of the fractured connecting rod, especially, with large size connecting rods in a high production environment. Despite the improvements, some disadvantages still exist such as: plastic deformation, lack of flexibility in adapting the same technique to different sizes of connecting rods, repeated breakage of force exertion elements of the machine, and poor quality of the fractured connecting rod. Moreover, some techniques are slow, costly, and technically very elaborate. Before presenting the idea of the current invention, it is necessary to discuss the engineering principles on which the invention stands.

**(II) TECHNICAL BACKGROUND**

**(A) Fracture Mechanics:**

Strength failures of load bearing elements can be either of the yielding-dominant (ductile) or fracture-dominant (brittle) types. In case of a cracked element; it may fail due to reaching the plastic collapse or fracture condition. Collapse and fracture are competing conditions, and the one satisfied first will prevail.

High-strength materials are more likely to fail in fracture mode before attaining the plastic collapse strength. Since connecting rods are made of high-strength materials, they generally fail under tensile forces due to reaching the fracture limit state.

Fracture may take place under one of two conditions, namely, plane stress or plane strain, depending on the thickness of the element. In general, connecting rods are thick enough to sustain plane strain fracture. In the presence of a V-notch or a crack, fracture occurs under essentially elastic conditions with a limited plasticity zone at the tip of the crack.

The stress intensity factor (K), is the characterizing parameter for crack extension. For each stress pattern, there is a corresponding value of the stress intensity factor. When the stress intensity factor reaches a certain value, crack propagates and collapse by fracture occurs. That critical value of the stress intensity factor under plane strain conditions, called the Plane Strain Fracture Toughness ($K_{1c}$), can be considered as a material property characterizing the crack resistance. Thus, the same value of $K_{Ic}$ should be obtained for a given material while testing specimens of different geometric shapes and sizes.

Lower temperature and faster strain rate decrease the plane strain fracture toughness for a specific material, while increasing the length of a pre-existing crack or decreasing the fracturing area will increase the stress intensity factor, if all other factors remain unchanged.

**(B) Resonance of a Structural System:**

The connecting rod, with all movement and rotation constraints imposed on it during the fracturing process, can be viewed as a structural system. Before explaining how to achieve and make use of a resonance condition in this fracturing technique, it is helpful to introduce the following definitions pertaining to an idealized structural system with finite number of degrees of freedom:

Degrees of freedom: the number of independent displacements required to define the displaced positions of all the masses relative to their original positions is called the number of degrees of freedom (DOFs).
Natural mode of vibration: a multi-degree-of freedom system (MDOF) would undergo simple harmonic motion, without a change of the deflected shape, if free vibration is initiated by appropriate distribution of displacements in various DOFs. In other words, for some characteristic deflected shapes, the system would vibrate in simple harmonic motion, and the initial shape would be maintained through out the motion. Each characteristic deflected shape ($\Phi_n$) is called a natural mode of vibration of the MDOF system.

Natural vibration properties: the time ($T_n$) required for a system to complete one cycle of the simple harmonic motion in one of its natural modes is called the natural period of that particular vibration mode. The corresponding natural cyclic frequency of vibration is $f_n$, and the natural circular frequency of vibration is $\omega_n$, where:

$$T_n = 2\pi/\omega_n = 1/f_n.$$

A vibrating system with N number of DOFs has N natural vibration frequencies $\omega_n$ (n = 1, 2,..., N), arranged in sequence from smallest to largest ($\omega_1 < \omega_2 < ... < \omega_N$), with corresponding natural periods $T_n$, and natural modes $\Phi_n$.

The excitation frequency: the frequency of a harmonic force applied to a system is called the excitation frequency or the forcing frequency.

Damping: the process by which vibration steadily diminishes in amplitude is called damping.

## SUMMARY OF THE INVENTION

The present invention employs a novel approach to fracture connecting rods. In this process, several factors are used to raise the stress intensity factor in the connecting rod up to the fracture point. Consequently, the use of single big force has been avoided with the application of several small magnitude forces. That eliminates many problems associated with the use of big forces. It also gives better control over the fracturing process, since the contribution of each factor is optimized to achieve the best results. For this process, a stress-riser should be provided in a prior process, using any of the known methods, in order to predetermine the fracture plane.

The present invention utilizes the following factors:

(a) Fatigue: if the stresses in a pre-notched connecting rod fluctuate due to the application of harmonic forces (or any time varying forces), the pre-existing crack (stress-riser) will extend incrementally depending on the range of fluctuation in the stress intensity factor. It is important to notice that the crack growth relates to the change of the stress intensity factor, not to its absolute value. Moreover, as the crack grows, the absolute value of stress intensity factor will increase.

(b) Resonance: during the fracturing process, the connecting rod will be in contact with many elements of the machine. These elements impose movement constraints, called geometrical boundary conditions, to the connecting rod. The connecting rod, with these boundary conditions, represents a distributed mass structural system, with an infinite number of degrees of freedom However, it can be idealized and analyzed as a system with finite number of degrees of freedoms by using the finite element method.

If a MDOF structural system is subjected to an external force system, where the spatial distribution of the force components is independent of time, it takes a certain deformed shape. This shape does not necessarily resemble any of the natural vibration modes of the system However, it has the same configuration as one of these natural modes, and with judicious selection of the external forces, the forced deformed shape can present a better approximation to that mode $\Phi_r$, which has a natural frequency $\omega_r$. In most cases, $\Phi_r$ is one of the first few natural modes.

If the force components have the same sinusoidal time variation, with a frequency that is the same as or close to the natural frequency $\omega_r$, a resonance condition occurs. Consequently, the fluctuation range of the stress intensity factor and its maximum value increase substantially. The crack extends, and fracture may occur, depending on the relative magnitudes of stress intensity factor and material fracture toughness.

The aforementioned principle is applied in the present invention, where two harmonic forces, with the same amplitude and a phase angle of 180°, are applied simultaneously to two sides of the connecting rod. The two forces act along a straight line parallel to the predetermined fracture plane and perpendicular to the axis of the bore cylindrical surface. Moreover, the clamping arrangement allows free deformation of major part, centered on the V-notch, of each of the two webs defining the bore.

A suggested method, to apply the two harmonic forces, is to transform the rotary motion generated by a hydraulic motor to a couple of rotary motions, one clockwise and another anti-clockwise. These rotary motions can be transformed to linear motions using cam means, which transfer the pressure to the connecting rod through two contacts. The use of a single motor will guarantee that there is no time lag between the two equal but opposite forces.

(c) Pre-stressing forces: three pre-stressing forces are applied in the present invention. The primary one is applied by moving an upper jaw, which is part of the clamping arrangement, in a direction perpendicular to the predetermined fracture plane and away from it. This force works to eliminate the compression stress zones created by the harmonic forces and to decrease the deformation due to its application, giving more rigidity to the system. Eliminating the compression zones is favorable, since they deviate the fracture from predetermined plane.

The secondary pre-stressing forces are two static forces, equal in magnitude and acting on the same straight line in opposite directions, toward the bore axis. The same mechanism used to apply the harmonic forces can be used to apply these forces. Firstly, the two contacts advance till they slightly press the part applying the secondary pre-stressing forces, and secondly, they move forward and backward applying the harmonic forces.

These forces have clamping and damping actions. However, since they act in the same opening loading mode as the primary force, the stresses due to all of them can be superimposed. This will facilitate further reduction of the high magnitude fracturing forces. Under the effect of the external forces, the deformed shape of the connecting rod changes with time. However, during each cycle, it passes through maximum and minimum deformation positions at time instants $T_{max}$ and To, respectively. The stress intensity factor corresponding to the harmonic forces has a maximum value at the maximum deformation position. Both of $T_0$ and $T_{max}$ can be determined analytically by knowing the characteristics of the forces.

(d) Dynamic force: a dynamic force is finally applied at a time instant $T_f$, by increasing the primary pre-stressing force suddenly as an impulsive force at $T_f$, or at a slower rate within a period centered on $T_f$. The time instant $T_f$ to be determined by performing several simple tests, by applying the fracturing force during different cycles at different time instants such as To (minimum deformation) or $T_{max}$ (maximum $K_I$) and comparing the quality of the fractured connecting rods.

For example, if $T_0$ comes after 0.10 seconds from the beginning of each cycle, and the natural vibration period is 0.25 second, a test can be performed by applying an impulsive force at $T_0$ during the cycle 101 after 25.10 seconds from the beginning of the harmonic excitation. In another test, a dynamic force is applied during a period starting from the instant 25.05 seconds, and ending at the instant 25.15 seconds, measured from the beginning of the excitation- Similar tests are performed by applying the fracturing force during different cycles, and at different time instants, and by comparing the quality of the fractured connecting rods, $T_f$ is identified. However, a longer period before applying the dynamic force, increases the fatigue effect.

All of the external forces used in the aforementioned factors are in the same loading mode and, generally, stress the connecting rod within the linear elastic regime. Thus, the stress intensity factor due to their collective effect, $\Sigma K_1$, is obtained by adding the values of $K_I$ that correspond to each one of them, if applied individually. Fracture occurs when $\Sigma K_I = K_{Ic}$.

The flexibility of the external force system used in the current invention, makes the technique suitable for the wide variety of connecting rods types and sizes, starting from those intended for light duty applications such as lawnmowers and outboard marine engines, up to the most powerful combustion engines.

## BRIEF DESCRIPTION OF THE DRAWINGS

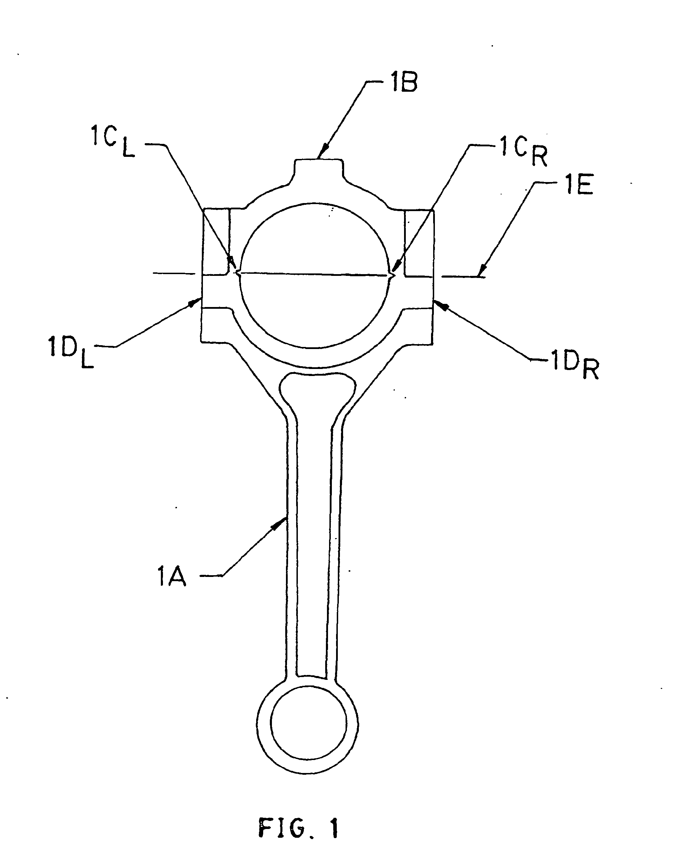

Figure 1 shows the integrally formed connecting rod, where 1A is the part intended to become the rod, 1B is the part intended to become the cap. $1 C_L$ and $1 C_R$ are the stress-riser, $1D_L$ and $1D_R$ are the sides where the harmonic forces and the secondary pre-stressing forces are applied, and IE is the predetermined fracture plane.

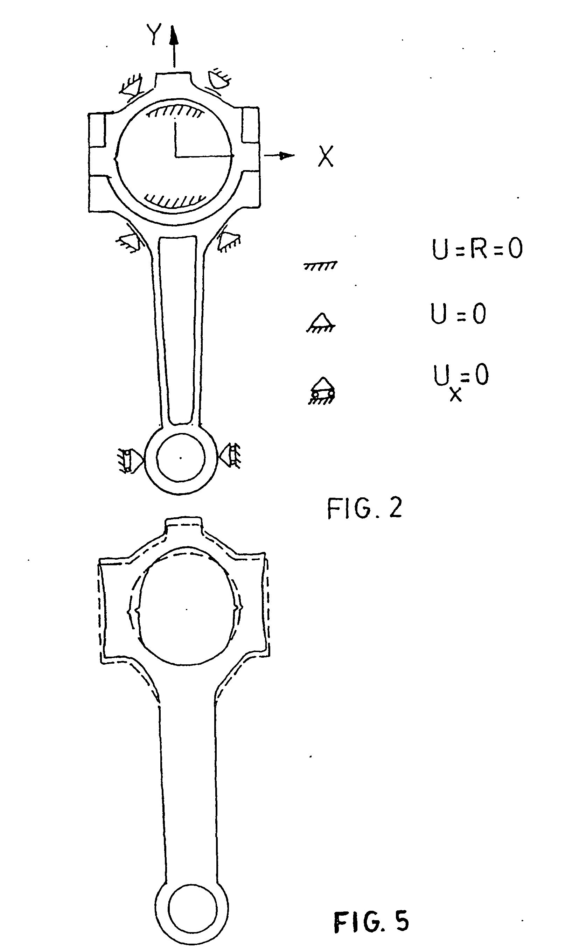

Figure 2 shows an idealization of a connecting rod as a structural system.

Figure 3 shows the external force system used to fracture the connecting rod, where $F_1$ is the primary pre-stressing force; $F_{2L}$ $F_{2R}$ are the secondary pre-stressing forces; $F_{3L}$, $F_{3R}$ are the harmonic forces; and $F_{4I}$, $F_{4D}$ are the impulsive and the slow rate dynamic force, respectively. It also shows the clamping arrangements and the force exerting elements of the machine; where 2 is the upper jaw; 3 is the lower jaw; $4_L$, $4_R$ are the two contacts; and 6; 7; 8; 9; 10; 11 are other clamping elements.

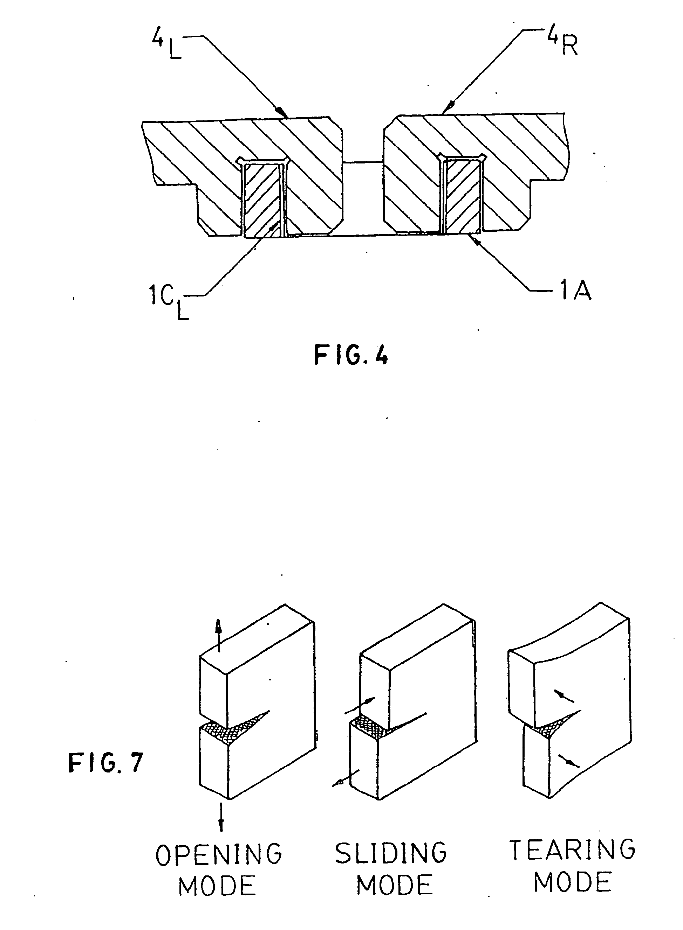

Figure 4 is a cross sectional view taken along line 5 of Figure 3.

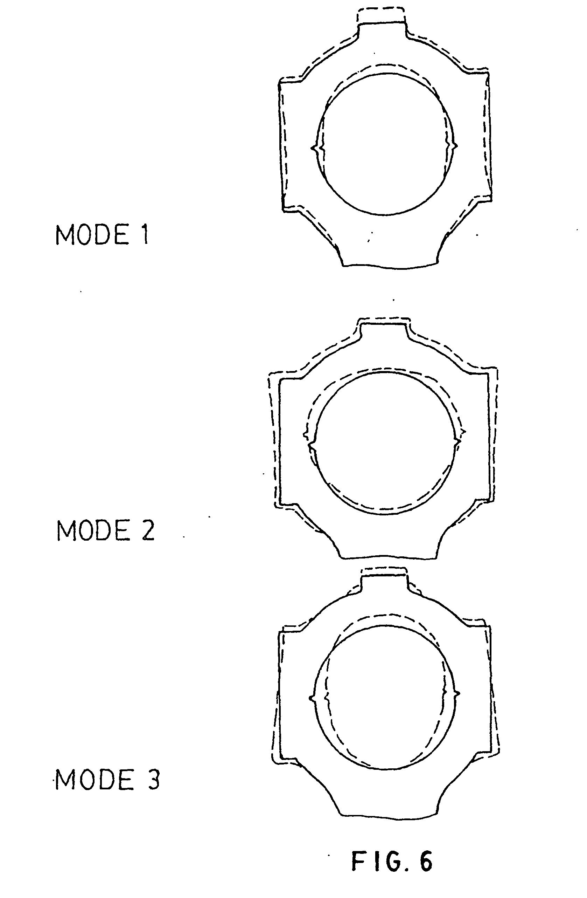

Figure 5 shows the deformed shape of the connecting rod under the effect of the pre-stressing forces and the harmonic forces. The deformed configuration is exaggerated for clarity.

Figure 6 shows the first three natural vibration modes of the idealized structural system. Notice how the first mode (Mode 1) has the same configuration of the deformed shape of the structure shown in Figure 5.

Figure 7 shows the different modes of loading a cracked structural element, all forces used in this structural system are in the opening mode.

## DESCRIPTION OF THE INVENTION:

The following is a description of the two parts of the process, the stress analysis, and the process implementation:

## (I) Stress Analysis

A stress analysis should be performed once for each type of connecting rods, using any appropriate computer software package according to the following steps:

(a) Creating a three dimensional solid model of the connecting rod.
(b) Idealizing the connecting rod as a structural system, using the solid model with the movements and rotation constraints that represents the geometrical boundary conditions, and determining the first few natural vibration frequencies and mode shapes of the system, using the finite element method.

(c) Determining the characterizing deformed shape of the system under the effect of a couple of harmonic forces with amplitude equal to unity, a primary pre-stressing force, and a couple of secondary pre-stressing forces, each with magnitude of unity, applying all simultaneously.

(d) Defining the natural mode shape $\Phi_r$ that has the same configuration as the deformed shape determined in step (c), and its corresponding natural frequency $\omega_r$.

(e) Determining the deformed shapes of the system under the effect of the forces described in step (c) applying each individually.

(f) Using the results of step (e), an optimum combination of the harmonic and pre-stressing forces is determined that produces a deformed shape closely resembling the modal shape $\Phi_r$.

(g) Determining the time instants To and $T_{max}$, measured from the beginning of any harmonic cycle, where $T_0$ is the time instant at which the deformed shape of the connecting rod is the closest to its original shape, $T_{max}$ is the time instant at which the stress intensity factor, corresponding to the harmonic forces, has a maximum value.

### (II) Process Implementation:

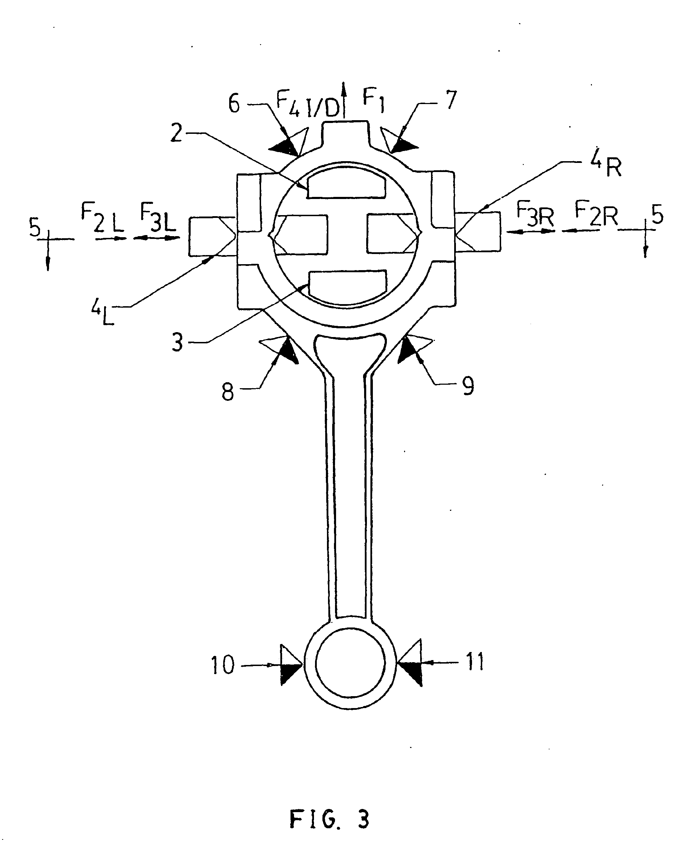

Firstly, the connecting rod is clamped in position on the upper jaw 2, which is movable in direction perpendicular to the predetermined fracture plane, and on the lower jaw 3, which is stationary. Both jaws are in contact with the inside cylindrical surface of the bore, while other elements 6, 7, 8, and 9 are pressing the connecting rod surface against the two jaws. It is supported at points 10 and 11 as shown in figure 3. However, the exact locations of these points depend on connecting rod configuration and manufacturing requirements.

Secondly, the pre-stressing force $F_1$ is applied, by moving the upper jaw away from plane 1E.

Thirdly, the two contacts 4 and 5 advances, in opposite directions, to contact the sides $1D_L$ and $1D_R$ applying the secondary pre-stressing forces $F_{2L}$ and $F_{2R}$. Fourthly, the two contacts $4_L$ and $4_R$ move forward and backward, simultaneously, applying the two harmonic forces $F_{3L}$ and $F_{3R}$, with a phase angle of 180°, while their frequency is as close as practically possible to the selected natural frequency of the system.

Fifthly, an impulsive fracturing force $F_{4I}$ is applied at the time instant $T_f$, causing a sudden increase of $F_1$ and, thus, fracturing the connecting rod. $T_f$ is determined first, by performing the tests that were described earlier.

An alternative to execute the last step is to apply a slow rate dynamic force within a period centered on the same time instant.

Although the preferred mode for carrying out this invention has been set forth in this specification, it is obvious that there are several alternative modes. One of them for instance, is to apply a harmonic force to the cap, in a direction that is perpendicular to the predetermined fracture plane.

While the present description of the process incorporates all of the aforementioned factors, eliminating the pre-stressing forces or either of them should not be construed as a departure from the scope of this invention. This is a valid option, especially, for small size connecting rods. In this case, the procedure that was described earlier should be followed, with an exception that is to skip the steps related to the omitted force or forces.

While particular embodiments of the invention have been disclosed, it is evident that many alternatives and modifications will be apparent to those skilled in the art in light of the forgoing description. Accordingly, it is intended to cover all such alternatives and modifications as fall within the scope of the appended claims.

### Claims

1. A process for the fracture separation, into a cap (1B) and a rod (1A), of an integrally formed connecting rod having a bore therein along a predetermined fracture plane (1E), the process comprising:

    a) fixing a part of the connecting rod that intended to become the rod, selectively, over a stationary lower jaw (3), a part of the connecting rod that intended to become the cap (1B), selectively, over an upper jaw (2) moveable along a straight line perpendicular to the predetermined fracture plane (1E),
    b) applying two harmonic forces ($F_{3L}$, $F_{3R}$) to two sides of the connecting rod, where at any time instant, the two harmonic forces are equal in magnitude, opposite in direction, and act along a straight line that is substantially parallel to the predetermined fracture plane (1E) and perpendicular to the axis of the bore cylindrical surface, said applying being accomplished by urging two contacts against the two sides, and
    c) applying a dynamic force ($F_{4I}$, $F_{4D}$) by urging the upper jaw (2) away from the lower jaw (3) to thereby fracture the connecting rod into said cap and rod.

2. A process as claimed in claim 1, wherein step b) is preceded by applying a pre-stressing force to the upper jaw (2), urging said upper jaw (2) away from the lower jaw and thereby pre-stressing the connecting rod.

3. A process as claimed in claim 1, wherein step b) is preceded by applying two pre-stressing forces to the two sides of the connecting rod, where the two pre-stressing forces are equal in magnitude, opposite in direction, and act along a straight line that is substantially parallel to the predetermined fracture plane (1E) and perpendicular to the bore axis, said applying being accomplished by urging the two contacts against the two sides.

4. A process as claimed in claim 1, wherein step b) is preceded by:

   a) applying a pre-stressing force to the upper jaw, urging said upper jaw away from the lower jaw and thereby pre-stressing the connecting rod, and
   b) applying two pre-stressing forces to the two sides of the connecting rod, where the two pre-stressing forces are equal in magnitude, opposite in direction, and act along a straight line that is substantially parallel to the predetermined fracture plane and perpendicular to the bore axis, said applying being accomplished by urging the two contacts against the two sides.

5. A process as claimed in any one of claims 1 to 4, wherein the frequency of the harmonic forces is substantially the same as a selected natural frequency of a structural system that idealizes the connecting rod with all movements and rotations constraints imposed on said connecting rod during the fracturing process, said selected natural frequency is the natural frequency associated with a natural vibration mode that has substantially the same configuration of the characterizing deformed shape of said structural system under the effect of the harmonic forces.

6. A process as claimed in any one of claims 1 to 5, wherein said dynamic force is applied during a time period centered on a time instant at which the deformed shape of the connecting rod is the closest to its original shape.

7. A process as claimed in any one of claims 1 to 5, wherein said dynamic force is an impulsive force applied substantially at a time instant at which the deformed shape of the connecting rod is the closest to its original shape.

8. A process as claimed in any one of claims 1 to 5, wherein said dynamic force is applied during a time period centered on a time instant at which the stress intensity factor corresponding to the harmonic forces has a maximum value.

9. The process as claimed in any one of claims 1 to 5, wherein said dynamic force is an impulsive force applied substantially at a time instant at which the stress intensity factor corresponding to the harmonic forces

has a maximum value.

10. A process for the fracture separation of a part having a cylindrical bore passing therethrough into a first portion and a second portion, the cylindrical bore having a central axis, the part having two opposed sides proximate to the intersection of a predetermined fracture plane passing through the cylindrical bore and the part, the process including the step of:

    applying at least one fatigue force to at least one of the first portion and the second portion, said at least one force being applied to fracture the part into the first portion (1B) and second portion (1A) so as to separate the first portion from the second portion substantially along said predetermined fracture plane (1E), said at least one fatigue force being selected from the group comprising:

    1) a longitudinal cyclic force applied to one of the first portion and the second portion relative to the other of the first portion and the second portion, said longitudinal cyclic force being applied in a direction substantially perpendicular to said predetermined fracture plane (1E), and
    ii) a lateral cyclic force applied to each of the opposed sides of the part, each of said lateral cyclic forces being applied along a substantially straight line that is substantially parallel to the predetermined fracture plane and substantially perpendicular to the central axis, where at any time instant, each of said lateral cyclic forces being substantially equal in magnitude and acting opposite in direction to one another.

11. A process as claimed in claim 10, wherein said part is a connecting rod, said first portion is a cap portion and said second portion is a rod portion.

12. A process as claimed in claim 10 or 11, wherein said at least one fatigue force is a longitudinal cyclic force applied to one of the first portion and the second portion relative to the other of the first portion and the second portion, said longitudinal cyclic force being applied in a direction substantially perpendicular to said predetermined fracture plane (1E).

13. A process as claimed in claim 10 or 11, wherein said at least one fatigue force is a lateral cyclic force ($F_{3L}$, $F_{3R}$) applied to each of the opposed sides of the part, each of said lateral cyclic forces being applied along a substantially straight line that is substantially parallel to the predetermined fracture plane and substantially perpendicular to the central axis, where at any time instant, each of said lateral cyclic forces being substantially equal in magnitude and acting opposite in direction to one another.

14. A process for the fracture separation of a part as claimed in any one of claims 10 to 13, the process including the steps of:

    a) applying at least one pre-stressing force to at least one of the first portion, the second portion and said sides of said part, said at least one pre-stressing force selected from the group comprising:

        i) a longitudinal pre-stressing force applied to one of the first portion and the second portion relative to the other of the first portion and the second portion, said longitudinal pre-stressing force being applied in a direction substantially perpendicular to said predetermined fracture plane, and
        ii) a lateral pre-stressing force applied to each of the opposed sides of the part, each of said lateral pre-stressing forces being applied along a substantially straight line that is substantially parallel to the predetermined fracture plane and substantially perpendicular to the central axis, where at any time instant, each of lateral pre-stressing forces being substantially equal in magnitude and acting opposite in direction to one another.

15. A process as claimed in any one of claims 10 to 14, wherein said at least one fatigue force is a harmonic force, the frequency of the harmonic forces is selected so as to achieve a resonance condition in said part.

16. A process as claimed in claim 14 or 15, wherein said at least one pre-stressing force is a longitudinal pre-stressing force applied to one of the first portion and the second portion relative to the other of the first portion and the second portion, said longitudinal pre-stressing force being applied in a direction substantially perpendicular to said predetermined fracture plane (1E).

17. A process as claimed in claim 14 or 15, wherein said at least one pre-stressing force is a lateral pre-stressing force applied to each of the opposed sides of the part, each of said lateral pre-stressing forces being applied along a substantially straight line that is substantially parallel to the predetermined fracture plane (1E) and substantially perpendicular to the central axis, where at any time instant, each of lateral pre-stressing forces being substantially equal in magnitude and acting opposite in direction to one another.

18. A process as claimed in any one of claims 14 to 17, wherein said part is a connecting rod, said first portion is a cap portion and said second portion is a rod portion.

19. A process as claimed in any one of claims 14 to 18, wherein said at least one fatigue force is a longitudinal cyclic force applied to one of the first portion and the second portion relative to the other of the first portion and the second portion, said longitudinal cyclic force being applied in a direction substantially perpendicular to said predetermined fracture plane (1E).

20. A process as claimed in any one of claims 14 to 18, wherein said at least one fatigue force is a lateral cyclic force ($F_{3L}$, $F_{3R}$) applied to each of the opposed sides of the part, each of said lateral cyclic forces being applied along a substantially straight line that is substantially parallel to the predetermined fracture plane and substantially perpendicular to the central axis, where at any time instant, each of lateral cyclic forces being substantially equal in magnitude and acting opposite in direction to one another (1E).

21. A process for the fracture separation of a part as claimed in claim 14 , the process including the steps of:

    applying at least one dynamic force ($F_{4I}$, $F_{4D}$) to one of the first portion and the second portion relative to the other of the first portion and the second portion, said at least one dynamic force being applied in a direction substantially perpendicular to said predetermined fracture plane (1E), said dynamic force being applied to fracture the part into the first portion and second portion so as to separate the first portion from the second portion substantially along said predetermined fracture plane (1E).

22. A process as claimed in claim 21, wherein said at least one fatigue force in a harmonic force, the frequency of the harmonic forces is selected so as to achieve a resonance condition in said part.

23. A process as claimed in claim 21 or 22, wherein said at least one dynamic force is applied during a time period centered on a time instant at which the deformed shape of the part is the closest to its original shape.

24. A process as claimed in claim 21 or 22, wherein said at least one dynamic force is an impulsive force applied substantially at a time instant at which the deformed shape of the part is the closest to its original shape.

25. A process as claimed in claim 21 or 22, wherein said at least one dynamic force is applied during a time period centered on a time instant at which the stress intensity factor corresponding to the at least one fatigue force has a maximum value.

26. A process as claimed in claim 21 or 22, wherein said at least one dynamic force is an impulsive force applied substantially at a time instant at which the stress intensity factor corresponding to the at least one fatigue forces has a maximum value.

27. A process as claimed in any one of claims 21 to 26, wherein said at least one pre-stressing force is a longitudinal pre-stressing force applied to one of the first portion and the second portion relative to the other of the first portion and the second portion, said longitudinal pre-stressing force being applied in a direction substantially perpendicular to said predetermined fracture plane (1E).

28. A process as claimed in any one of claims 21 to 26, wherein said at least one pre-stressing force is a lateral pre-stressing force applied to each of the opposed sides of the part, each of said lateral pre-stressing forces being applied along a substantially straight line that is substantially parallel to the predetermined fracture plane and substantially perpendicular to the central axis, where at any time instant, each of lateral pre-stressing forces being substantially equal in magnitude and acting opposite in direction to one another.

29. A process as claimed in any one of claims 21 to 28, wherein said part is a connecting rod, said first portion is a cap portion (1B) and said second portion is a rod portion (1A).

30. A process as claimed in any one of claims 21 to 29, wherein said at least one fatigue force is a longitudinal cyclic force applied to one of the first portion and the second portion relative to the other of the first portion and the second portion, said longitudinal cyclic force being applied in a direction substantially perpendicular to said predetermined fracture plane (1E).

31. A process as claimed in any one of claims 21 to 29, wherein said at least one fatigue force ($F_{3L}$, $F_{3R}$) is a lateral cyclic force applied to each of the opposed sides of the part, each of said lateral cyclic forces being applied along a substantially straight line that is substantially parallel to the predetermined fracture plane and substantially perpendicular to the central axis, where at any time instant, each of lateral cyclic forces being substantially equal in magnitude and acting opposite in direction to one another.

**Patentansprüche**

1. Verfahren zum Bruchtrennen in eine Kappe (1B) und eine Stange (1A) einer integral gebildeten Verbindungsstange mit einer darin angeordneten Öffnung entlang einer vorbestimmten Bruchebene (1 E), wobei das Verfahren umfasst:

   (a) selektives Befestigen eines als Stange vorgesehenen Teils der Verbindungsstange über einer stationären unteren Backe (3), selektives Befestigen eines als Kappe (1B) vorgesehenen Teils der Verbindungsstange über einer oberen Backe (2), bewegbar entlang einer geraden Linie orthogonal zu der vorbestimmten Bruchebene (1E),
   (b) Ausüben zweier harmonischer Kräfte ($F_{3L}$, $F_{3R}$) auf zwei Seiten der Verbindungsstange, wobei zu jedem Zeitpunkt die zwei harmonischen Kräfte gleich groß sind, entgegengesetzt sind und entlang einer geraden Linie wirken, welche im Wesentlichen parallel zu der vorbestimmten Bruchebene (1 E) und orthogonal zu der Achse der zylindrischen Fläche der Öffnung ist, wobei das Ausüben durch Drängen zweier Kontakte gegen die beiden Seiten durchgeführt wird, und
   c) Ausüben einer dynamischen Kraft ($F_{41}$, $F_{40}$) durch Drängen der oberen Backe (2) weg von der unteren Backe (3), um **dadurch** die Verbindungsstange in die Kappe und die Stange zu brechen.

2. Verfahren nach Anspruch 1, bei welchem dem Schritt b) das Ausüben einer vorspannenden Kraft auf die obere Backe (2) vorangeht, wodurch die obere Backe (2) von der unteren Backe weg gedrängt wird und **dadurch** die Verbindungsstange vorgespannt wird.

3. Verfahren nach Anspruch 1, bei weichem dem Schritt b) das Ausüben zweier vorspannender Kräfte auf die zwei Seiten der Verbindungsstange vorangeht, wobei die zwei vorspannenden Kräfte gleich groß sind, entgegengesetzt sind und entlang einer geraden Linie wirken, welche im Wesentlichen parallel zu der vorbestimmten Bruchebene (1E) und orthogonal zu der Achse der Öffnung ist, wobei das Ausüben durch Drängen zweier Kontakte gegen die zwei Seiten durchgeführt wird.

4. Verfahren nach Anspruch 1, wobei dem Schritt b) vorangeht

   a) Ausüben einer vorspannenden Kraft auf die obere Backe, wodurch die obere Backe von der unteren Backe weg gedrängt wird und **dadurch** die Verbindungsstange vorgespannt wird, und

b) Ausüben zweier vorspannender Kräfte auf die zwei Seiten der Verbindungsstange, wobei die zwei vorspannenden Kräfte gleich groß sind, entgegengesetzt sind und entlang einer geraden Linie wirken, welche im Wesentlichen parallel zu der vorbestimmten Bruchebene und orthogonal zu der Achse der Öffnung ist, wobei das Ausüben durch Drängen der zwei Kontakte gegen die zwei Seiten durchgeführt wird.

5. Verfahren nach einem der Ansprüche 1 bis 4, wobei die Frequenz der harmonischen Kräfte im Wesentlichen dieselbe ist wie eine gewählte, natürliche Frequenz eines strukturellen Systems, welches die Verbindungsstange mit allen Bewegungen und Rotationsbeschränkungen, welchen die Verbindungsstange während des Bruchverfahrens unterliegt, idealisiert, wobei die gewählte natürliche Frequenz die einem natürlichen Vibrationsmodus zugeordnete natürliche Frequenz ist, welches im Wesentlichen dieselbe Konfiguration der kennzeichnenden verformten Gestalt des strukturellen Systems unter der Wirkung der harmonischen Kräfte aufweist.

6. Verfahren nach einem der Ansprüche 1 bis 5, wobei die dynamische Kraft während eines Zeitraums ausgeübt wird, der auf einen Zeitpunkt zentriert ist, zu dem die verformte Gestalt der Verbindungsstange ihrer ursprünglichen Gestalt am Nächsten ist.

7. Verfahren nach einem der Ansprüche 1 bis 5, wobei die dynamische Kraft eine Impulsivkraft ist, welche im Wesentlichen zu einem Zeitpunkt ausgeübt wird, zu dem die verformte Gestalt der Verbindungsstange ihrer ursprünglichen Gestalt am Nächsten ist.

8. Verfahren nach einem der Ansprüche 1 bis 5, wobei die dynamische Kraft während eines Zeitraums ausgeübt wird, der auf einen Zeitpunkt zentriert ist, zu dem der den harmonischen Kräften entsprechende Spannungsintensitätsfaktor einen maximalen Wert aufweist.

9. Verfahren nach einem der Ansprüche 1 bis 5, wobei die dynamische Kraft eine impulsivkraft ist, welche im Wesentlichen zu einem Zeitpunkt ausgeübt wird, zu dem der den harmonischen Kräften entsprechende Spannungsintensitätsfaktor einen maximalen Wert aufweist.

10. Verfahren zum Bruchtrsnnen eines Teils mit einer hindurch verlaufenden zylindrischen Öffnung in einen ersten Abschnitt und einen zweiten Abschnitt, wobei die zylindrische Öffnung eine xentrale Achse aufweist, wobei das Teil zwei gegenüberliegende Seiten nahe des Schnittpunktes einer durch die zylindrische Öffnung und das Teil verlaufenden, vorbestimmten Bruchebene umfasst, wobei das Verfahren den folgenden Schritt umfasst:

Ausüben wenigstens einer Ermüdungskraft auf wenigstens einen des ersten Abschnitts und des zweiten Abschnitts, wobei die wenigstens eine Kraft ausgeübt wird um das Teil in den ersten Abschnitt (1B) und den zweiten Abschnitt (1 A) zu brechen, um den ersten Abschnitt von dem zweiten Abschnitt im Wesentlichen entlang der vorbestimmten Bruchebene (1 E) zu trennen, wobei die wenigstens eine Ermüdungskraft gewählt ist aus der Gruppe, umfassend:

i) eine auf einen des ersten Abschnitts und des zweiten Abschnitts bezüglich des anderen des ersten Abschnitts und des zweiten Abschnitts ausgeübte zyklische Kraft in Längsrichtung, wobei die zyklische Kraft in Längsrichtung in einer Richtung im Wesentlichen orthogonal zu der vorbestimmten Bruchebene (1 E) ausgeübt wird, und
ii) eine auf jede der gegenüberliegenden Seiten des Teils ausgeübte laterale zyklische Kraft, wobei jede der lateralen zyklischen Kräfte entlang einer im Wesentlichen geraden Linie ausgeübt wird, welche im Wesentlichen parallel zu der vorbestimmten Bruchebene ist und im Wesentlichen orthogonal zu der zentralen Achse ist, wobei zu jedem Zeitpunkt alle lateralen zyklischen Kräfte im Wesentlichen gleich groß sind und in entgegengesetzter Richtung zueinander wirken.

11. Verfahren nach Anspruch 10, wobei das Teil eine Verbindungsstange ist, der erste Abschnitt ein Kappenabschnitt ist und der zweite Abschnitt ein Stangenabsohnitt ist.

12. VerFahren nach Anspruch 10 oder 11, wobei die wenigstens eine Ermüdungskraft eine auf einen des ersten Abschnitts und des zweiten Abschnitts bezüglich des anderen des ersten Abschnitts und des zweiten Abschnitts ausgeübte zyklische Kraft in Längsrichtung ist, wobei die zyklische Kraft in Längsrichtung in einer Richtung im Wesentlichen orthogonal zu der vorbestimmten Bruchebene (1 E) ausgeübt wird.

13. Verfahren nach Anspruch 10 oder 11, wobei die wenigstens eine Ermüdungskraft eine auf jede der gegenüberliegenden Seiten des Teils ausgeübte laterale zyklische Kraft ($F_{3L}$, $F_{3R}$) ist, wobei jede der lateralen harmonischen Kräfte entlang einer im Wesentlichen geraden Linie ausgeübt wird, welche im Wesentlichen parallel zu der vorbestimmten Bruchebene ist und im Wesentlichen orthogonal zu der zentralen Achse ist, wobei zu jedem Zeitpunkt alle lateralen zyklischen Kräfte im Wesentlichen gleich groß sind und in entgegengesetzter Richtung zueinander wirken.

14. Verfahren zum Bruchtrennen eines Teils nach einem der Ansprüche 10 bis 13, wobei das Verfahren die folgenden Schritte umfasst:

(a) Ausüben wenigstens einer vorspannenden Kraft auf wenigstens einen des ersten Teils, des zweiten Teils und der Seiten des Teils, wobei die wenigstens eine vorspannende Kraft gewählt ist aus der Gruppe, umfassend:

i) eine auf einen des ersten Abschnitts und des zweiten Abschnitts bezüglich des anderen des ersten Abschnitts und des zweiten Abschnitts ausgeübte vorspannende Kraft in Längsrichtung, wobei die vorspannende Kraft in Längsrichtung in einer Richtung im Wesentlichen orthogonal zu der vorbestimmten Bruchebene ausgeübt wird, und
ii) eine auf jede der gegenüberliegenden Seiten des Teils ausgeübte laterale vorspannende Kraft, wobei jede der lateralen vorspannenden Kräfte entlang einer im Wesentlichen geraden Linie ausgeübt wird, welche im Wesentlichen parallel zu der vorbestimmten Bruchebene ist und im Wesentlichen orthogonal zu der zentralen Achse ist, wobei zu jedem Zeitpunkt alle lateralen vorspannenden Kräfte im Wesentlichen gleich groß sind und in entgegengesetzter Richtung zueinander wirken.

15. Verfahren nach einem der Ansprüche 10 bis 14, wobei die wenigstens eine Ermüdungskraft eine harmonische Kraft ist, wobei die Frequenz der harmonischen Kräfte derart gewählt ist, dass ein Resonanzzustand in dem Teil erzielt wird.

16. Verfahren nach Anspruch 14 oder 16, wobei die wenigstens eine vorspannende Kraft eine vorspannende Kraft in Längsrichtung ist, welche auf einen des ersten Abschnitts und des zweiten Abschnitts bezüglich des anderen des ersten Abschnitts und des zweiten Abschnitts ausgeübt wird, wobei die vorspannende Kraft in Längsrichtung in einer Richtung im Wesentlichen orthogonal zu der vorbestimmten Bruchebene (1 E) ausgeübt wird.

17. Verfahren nach Anspruch 14 oder 15, wobei die wenigstens eine vorspannende Kraft eine auf jede der gegenüberliegenden Seiten des Teils ausgeübte laterale vorspannende Kraft ist, wobei jede der lateralen vorspannenden Kräfte entlang einer im Wesentlichen geraden Linie ausgeübt wird, welche im Wesentlichen parallel zu der vorbestimmten Bruchebene (1E) ist und im Wesentlichen orthogonal zu der zentralen Achse ist, wobei zu jedem Zeitpunkt alle lateralen vorspannenden Kräfte im Wesentlichen gleich groß sind und in entgegengesetzter Richtung zueinander wirken.

18. Verfahren nach einem der Ansprüche 14 bis 17, wobei das Teil eine Verbindungsstange ist, der erste Abschnitt ein Kappenabschnitt ist und der zweite Abschnitt ein Stangenabschnitt ist.

19. Verfahren nach einem der Ansprüche 14 bis 18, wobei die wenigstens eine Ermüdungskraft eine auf einen des ersten Abschnitts und des zweiten Abschnitts bezüglich des anderen des ersten Abschnitts und des zweiten Abschnitts ausgeübte zyklische Kraft in Längsrichtung ist, wobei die zyklische Kraft in Längsrichtung in einer Richtung im Wesentlichen orthogonal zu der vorbestimmten Bruchebene (1 E) ausgeübt wird.

20. Verfahren nach einem der Ansprüche 14 bis 18, wobei die wenigstens eine Ermüdungskraft eine auf jede der gegenüberliegenden Seiten des Teils ausgeübte laterale zyklische Kraft ($F_{3L}$, $F_{3R}$) ist, wobei jede der lateralen zyklischen Kräfte entlang einer im Wesentlichen geraden Linie ausgeübt wird, welche im Wesentlichen parallel zu der vorbestimmten Bruchebene ist und im Wesentlichen orthogonal zu der zentralen Achse ist, wobei zu jedem Zeitpunkt alle lateralen zyklischen Kräfte im Wesentlichen gleich groß sind und in entgegengesetzter Richtung zueinander wirken (1 E).

21. Verfahren zum Bruchtrennen eines Teils wie in Anspruch 14 beansprucht, wobei das Verfahren die folgenden Schritte umfasst:

Ausüben wenigstens einer dynamischen Kraft ($F_{41}$, $F_{4D}$) auf einen des ersten Abschnitts und des zweiten Abschnitts bezüglich des anderen des ersten Abschnitts und des zweiten Abschnitts, wobei die wenigstens eine dynamische Kraft in einer Richtung im Wesentlichen orthogonal zu der vorbestimmten Bruchebene (1 E) ausgeübt wird, und wobei die dynamische Kraft ausgeübt wird, um den Teil in den ersten Abschnitt und den zweiten Abschnitt zu brechen, um den ersten Abschnitt von dem zweiten Abschnitt im Wesentlichen entlang der vorbestimmten Bruchebene (1E) zu trennen.

22. Verfahren nach Anspruch 21, wobei die wenigstens eine Brmüdungskraft eine harmonische Kraft ist, wobei die Frequenz der harmonischen Kräfte derart gewählt ist, dass ein Resonanzzustand in dem Teil erzielt wird.

**23.** Verfahren nach Anspruch 21 oder 22, wobei die wenigstens eine dynamische Kraft während eines Zeitraums ausgeübt wird, der auf einen Zeitpunkt zentriert ist, zu dem die verformte Gestalt des Teils seiner ursprünglichen Gestalt am Nächsten ist.

**24.** Verfahren nach Anspruch 21 oder 22, wobei die wenigstens eine dynamische Kraft eine Impulsivkraft ist, welche im Wesentlichen zu einem Zeitpunkt ausgeübt wird, zu dem die verformte Gestalt des Teils seiner ursprünglichen Gestalt am Nächsten ist.

**25.** Verfahren nach einem der Ansprüche 21 bis 22, wobei die wenigstens eine dynamische Kraft während eines Zeitraums ausgeübt wird, der auf einen Zeitpunkt zentriert ist, zu dem der Spannungsintensitätsfäktor, welcher der wenigstens einen Ermüdungskraft entspricht, einen maximalen Wert aufweist.

**26.** Verfahren nach Anspruch 21 oder 22, wobei die wenigstens eine dynamische Kraft eine Impulsivkraft ist, welche im Wesentlichen zu einem Zeitpunkt ausgeübt wird, zu dem der Spannungsitititensitätefaktor, welcher der wenigstens einen Ermüdungskraft entspricht, einen maximalen Wert aufweist.

**27.** Verfahren nach einem der Ansprüche 21 bis 26, wobei die wenigstens eine vorspannende Kraft eine vorspannende Kraft in Längsrichtung ist, welche auf einen des ersten Abschnitts und des zweiten Abschnitts bezüglich des anderen des ersten Abschnitts und des zweiten Abschnitts ausgeübt wird, wobei die vorspannende Kraft in Längsrichtung in einer Richtung im Wesentlichen orthogonal zu der vorbestimmten Bruchebene (1 E) ausgeübt wird.

**28.** Verfahren nach einem der Ansprüche 21 bis 26, wobei die wenigstens eine vorspannende Kraft eine auf jede der gegenüberliegenden Seiten des Teils ausgeübte laterale vorspannende Kraft ist, wobei jede der lateralen vorspannenden Kräfte entlang einer im Wesentlichen geraden Linie ausgeübt wird, welche im Wesentlichen parallel zu der vorbestimmten Bruchebene ist und im Wesentlichen orthogonal zu der zentralen Achse ist, wobei zu jedem Zeitpunkt alle lateralen vorspannenden Kräfte im Wesentlichen gleich groß sind und in entgegengesetzter Richtung zueinander wirken.

**29.** Verfahren nach einem der Ansprüche 21 bis 28, wobei das Teil eine Verbindungsstange ist, der erste Abschnitt ein Kappenabschnitt (1B) ist und der zweite Abschnitt ein Stangenabschnitt (1A) ist.

**30.** Verfahren nach einem der Ansprüche 21 bis 29, wobei die wenigstens eine Ermüdungskraft eine auf einen des ersten Absahnifts und des zweiten Abschnitts bezüglich des anderen des ersten Abschnitts und des zweiten Abschnitts ausgeübte zyklische Kraft in Längsrichtung ist, wobei die zyklische Kraft in Längsrichtung in einer Richtung im Wesentlichen orthogonal zu der vorbestimmten Bruchebene (1 E) ausgeübt wird.

**31.** Verfahren nach einem der Ansprüche 21 bis 29, wobei die wenigstens eine Ermüdungskraft ($F_{3L}$, $F_{3R}$) eine auf jede der gegenüberliegenden Seiten des Teils ausgeübte laterale zyklische Kraft ist, wobei jede der lateralen zyklischen Kräfte entlang einer im Wesentlichen geraden Linie ausgeübt wird, welche im Wesentlichen parallel zu der vorbestimmten Bruchebene ist und im Wesentlichen orthogonal zu der zentralen Achse ist, wobei zu jedem Zeitpunkt alle lateralen zyklischen Kräfte im Wesentlichen gleich groß, sind und in entgegengesetzter Richtung zueinander wirken.

**Revendications**

**1.** Procédé de séparation par rupture, en un couvercle (1B) et une tige (1A), d'une bielle formée d'un seul tenant possédant un alésage le long d'un plan de rupture prédéterminé (1E), le procédé comprenant :

> a) la fixation d'une partie de la bielle destinée à devenir la tige, sélectivement, sur une mâchoire inférieure stationnaire (3), d'une partie de la bielle destinée à devenir le couvercle (1B), sélectivement, sur une mâchoire supérieure (2) mobile le long d'une ligne droite perpendiculaire au plan de rupture prédéterminé (1E),
> b) l'application de deux forces harmoniques ($F_{3L}$, $F_{3R}$) à deux côtés de la bielle, où à tout instant, les deux forces harmoniques sont de magnitude égale, dans une direction opposée, et agissent le long d'une ligne droite qui est sensiblement parallèle au plan de rupture prédéterminé (1E) et perpendiculaire à l'axe de la surface cylindrique de l'alésage, ladite application étant accomplie en poussant deux contacts contre les deux côtés, et
> c) l'application d'une force dynamique ($P_{4I}$, $F_{4D}$) en poussant la mâchoire supérieure (2) pour l'éloigner de la mâchoire inférieure (3) pour rompre ainsi la bielle en ledit couvercle et ladite tige.

**2.** Procédé selon la revendication 1, dans lequel l'étape b) est précédée de l'application d'une force de précontrainte à la mâchoire supérieure (2), poussant ladite mâchoire supérieure (2) pour l'éloigner de la mâchoire inférieure et pré-contraignant ainsi la bielle.

**3.** Procédé selon la revendication 1, dans lequel l'étape b) est précédée de l'application de deux forces de précontrainte aux deux côtés de la bielle, où les deux forces de précontrainte sont de magnitude égale, dans une direction opposée, et agissent le long d'une ligne droite qui est sensiblement parallèle au plan de rupture prédéterminé (1E) et perpendiculaire à l'axe d'alésage, ladite application étant accomplie en poussant les deux contacts contre les deux côtés.

4. Procédé selon la revendication 1, dans lequel l'étape b) est précédée de :

   a) l'application d'une force de précontrainte à la mâchoire supérieure, poussant ladite mâchoire supérieure pour l'éloigner de la mâchoire inférieure et pré-contraignant ainsi la bielle, et
   b) l'application de deux forces de précontrainte aux deux côtés de la bielle, où les deux forces de précontrainte sont de magnitude égale, dans une direction opposée, et agissent le long d'une ligne droite qui est sensiblement parallèle au plan de rupture prédéterminé et perpendiculaire à l'axe d'alésage, ladite application étant accomplie en poussant les deux contacts contre les deux côtés.

5. Procédé selon l'une quelconque des revendications 1 à 4, dans lequel la fréquence des forces harmoniques est sensiblement la même qu'une fréquence naturelle sélectionnée d'un système structurel qui idéalise la bielle avec toutes les contraintes de mouvements et de rotations imposées à ladite bielle pendant le procédé de rupture, ladite fréquence naturelle sélectionnée est la fréquence naturelle associée à un mode de vibration naturel qui a sensiblement la même configuration de la forme déformée caractérisante dudit système structurel sous l'effet des forces harmoniques.

6. Procédé selon l'une quelconque des revendications 1 à 5, dans lequel ladite force dynamique est appliquée pendant une période centrée sur un instant auquel la forme déformée de la bielle est la plus proche de sa forme originale.

7. Procédé selon l'une quelconque des revendications 1 à 5, dans lequel ladite force dynamique est une force impulsive appliquée sensiblement à un instant auquel la forme déformée de la bielle est la plus proche de sa forme originale.

8. Procédé selon l'une quelconque des revendications 1 à 5, dans lequel ladite force dynamique est appliquée pendant une période centrée sur un instant auquel le facteur d'intensité de contrainte correspondant aux forces harmoniques a une valeur maximum.

9. Procédé selon l'une quelconque des revendications 1 à 5, dans lequel ladite force dynamique est une force impulsive appliquée sensiblement à un instant auquel le facteur d'intensité de contrainte correspondant aux forces harmoniques a une valeur maximum.

10. Procédé de séparation par rupture d'une pièce ayant un alésage cylindrique passant à travers celle-ci en une première partie et une seconde partie, l'alésage cylindrique ayant un axe central, la pièce ayant deux côtés opposés à proximité de l'intersection d'un plan de rupture prédéterminé passant à travers l'alésage cylindrique et la pièce, le procédé comprenant l'étape consistant à :

   appliquer au moins une force de fatigue à au moins une de la première partie et de la seconde partie, ladite au moins une force étant appliquée pour rompre la pièce en la première partie (1B) et la seconde partie (1A) de manière à séparer la première partie de la seconde partie sensiblement le long dudit plan de rupture prédéterminé (1E), ladite au moins une force de fatigue étant sélectionnée dans le groupe comprenant :

      i) une force cyclique longitudinale appliquée à une de la première partie et de la seconde partie par rapport à l'autre de la première partie et de la seconde partie, ladite force cyclique longitudinale étant appliquée dans une direction sensiblement perpendiculaire audit plan de rupture prédéterminé (1E), et
      ii) une force cyclique latérale appliquée à chacun des côtés opposés de la pièce, chacune desdites forces cycliques latérales étant appliquée le long d'une ligne sensiblement droite qui est sensiblement parallèle au plan de rupture prédéterminé et sensiblement perpendiculaire à l'axe central, où à tout instant, chacune desdites forces cycliques latérales a une magnitude sensiblement égale et agit dans une direction opposée l'une par rapport à l'autre.

11. Procédé selon la revendication 10, dans lequel ladite pièce est une bielle, ladite première partie est une partie de couvercle et ladite seconde partie est une partie de tige.

12. Procédé selon la revendication 10 ou 11, dans lequel ladite au moins une force de fatigue est une force cyclique longitudinale appliquée à une de la première partie et de la seconde partie par rapport à l'autre de la première partie et de la seconde partie, ladite force cyclique longitudinale étant appliquée dans une direction sensiblement perpendiculaire audit plan de rupture prédéterminé (IE).

**13.** Procédé selon la revendication 10 ou 11, dans lequel ladite au moins une force de fatigue est une force cyclique latérale ($F_{3L}$, $F_{3R}$) appliquée à chacun des côtés opposés de la pièce, chacune desdites forces cycliques latérales étant appliquée le long d'une ligne sensiblement droite qui est sensiblement parallèle au plan de rupture prédéterminé et sensiblement perpendiculaire à l'axe central, où à tout instant, chacune desdites forces cycliques latérales a une magnitude sensiblement égale et agit dans une direction opposée l'une par rapport à l'autre.

**14.** Procédé de séparation par rupture d'une pièce selon l'une quelconque des revendications 10 à 13, le procédé comprenant les étapes consistant à :

a) appliquer au moins une force de précontrainte à au moins un élément parmi la première partie, la seconde partie et lesdits côtés de ladite pièce, ladite au moins une force de précontrainte étant sélectionnée dans le groupe comprenant :

i) une force de précontrainte longitudinale appliquée à une de la première partie et de la seconde partie par rapport à l'autre de la première partie et de la seconde partie, ladite force de précontrainte longitudinale étant appliquée dans une direction sensiblement perpendiculaire audit plan de rupture prédéterminé, et

ii) une force de précontrainte latérale appliquée à chacun des côtés opposés de la pièce, chacune desdites forces de précontrainte latérale étant appliquée le long d'une ligne sensiblement droite qui est sensiblement parallèle au plan de rupture prédéterminé et sensiblement perpendiculaire à l'axe central, où à tout instant, chacune des forces de précontrainte latérale a une magnitude sensiblement égale et agit dans une direction opposée l'une par rapport à l'autre.

**15.** Procédé selon l'une quelconque des revendications 10 à 14, dans lequel ladite au moins une force de fatigue est une force harmonique, la fréquence des forces harmoniques est sélectionnée de manière à obtenir une condition de résonance dans ladite pièce.

**16.** Procédé selon la revendication 14 ou 15, dans lequel ladite au moins une force de précontrainte est une force de précontrainte longitudinale appliquée à une de la première partie et de la seconde partie par rapport à l'autre de la première partie et de la seconde partie, ladite force de précontrainte longitudinale étant appliquée dans une direction sensiblement perpendiculaire audit plan de rupture prédéterminé (1E).

**17.** Procédé selon la revendication 14 ou 15, dans lequel ladite au moins une force de précontrainte est une force de précontrainte latérale appliquée à chacun des côtés opposés de la pièce, chacune desdites forces de précontrainte latérale étant appliquée le long d'une ligne sensiblement droite qui est sensiblement parallèle au plan de rupture prédéterminé (1E) et sensiblement perpendiculaire à l'axe central, où à tout instant, chacune des forces de précontrainte latérale a une magnitude sensiblement égale et agit dans une direction opposée l'une par rapport à l'autre.

**18.** Procédé selon l'une quelconque des revendications 14 à 17, dans lequel ladite pièce est une bielle, ladite première partie est une partie de couvercle et ladite seconde partie est une partie de tige.

**19.** Procédé selon l'une quelconque des revendications 14 à 18, dans lequel ladite au moins une force de fatigue est une force cyclique longitudinale appliquée à une de la première partie et de la seconde partie par rapport à l'autre de la première partie et de la seconde partie, ladite force cyclique longitudinale étant appliquée dans une direction sensiblement perpendiculaire audit plan de rupture prédéterminé (1E).

**20.** Procédé selon l'une quelconque des revendications 14 à 18, dans lequel ladite au moins une force de fatigue est une force cyclique latérale ($F_{3L}$, $F_{3R}$) appliquée à chacun des côtés opposés de la pièce, chacune desdites forces cycliques latérales étant appliquée le long d'une ligne sensiblement droite qui est sensiblement parallèle au plan de rupture prédéterminé et sensiblement perpendiculaire à l'axe central, où à tout instant, chacune des forces cycliques latérales a une magnitude sensiblement égale et agit dans une direction opposée l'une par rapport à l'autre (1E).

**21.** Procédé de séparation par rupture d'une pièce selon la revendication 14, le procédé comprenant les étapes consistant à :

a) appliquer au moins une force dynamique ($F_{4I}$, $F_{4D}$) à une de la première partie et de la seconde partie par rapport à l'autre de la première partie et de la seconde partie, ladite au moins une force dynamique étant appliquée dans une direction sensiblement perpendiculaire audit plan de rupture prédéterminé (1E), ladite force dynamique étant appliquée pour rompre la pièce en la première partie et la seconde partie de manière à séparer la première partie de la seconde partie sensiblement le long dudit plan de rupture prédéterminé (1E).

**22.** Procédé selon la revendication 21, dans lequel ladite au moins une force de fatigue est une force harmonique, la fréquence des forces harmoniques est sélectionnée de manière à obtenir une condition de résonance dans ladite pièce.

**23.** Procédé selon la revendication 21 ou 22, dans lequel ladite au moins une force dynamique est appliquée pendant une période centrée sur un instant auquel la forme déformée de la pièce est la plus proche de sa forme originale.

**24.** Procédé selon la revendication 21 ou 22, dans lequel ladite au moins une force dynamique est une force impulsive appliquée sensiblement à un instant auquel la forme déformée de la pièce est la plus proche de sa forme originale.

**25.** Procédé selon la revendication 21 ou 22, dans lequel ladite au moins une force dynamique est appliquée pendant une période centrée sur un instant auquel le facteur d'intensité de contrainte correspondant à la au moins une force de fatigue a une valeur maximum.

**26.** Procédé selon la revendication 21 ou 22, dans lequel ladite au moins une force dynamique est une force impulsive appliquée sensiblement à un instant auquel le facteur d'intensité de contrainte correspondant à la au moins une force de fatigue a une valeur maximum.

**27.** Procédé selon l'une quelconque des revendications 21 à 26, dans lequel ladite au moins une force de précontrainte est une force de précontrainte longitudinale appliquée à une de la première partie et de la seconde partie par rapport à l'autre de la première partie et de la seconde partie, ladite force de précontrainte longitudinale étant appliquée dans une direction sensiblement perpendiculaire audit plan de rupture prédéterminé (1E).

**28.** Procédé selon l'une quelconque des revendications 21 à 25, dans lequel ladite au moins une force de précontrainte est une force de précontrainte latérale appliquée à chacun des côtés opposés de la pièce, chacune desdites forces de précontrainte latérale étant appliquée le long d'une ligne sensiblement droite qui est sensiblement parallèle au plan de rupture prédéterminé et sensiblement perpendiculaire à l'axe central, où à tout instant, chacune des forces de précontrainte latérale a une magnitude sensiblement égale et agit dans une direction opposée l'une par rapport à l'autre.

**29.** Procédé selon l'une quelconque des revendications 21 à 28, dans lequel ladite pièce est une bielle, ladite première partie est une partie de couvercle (1B) et ladite seconde partie est une partie de tige (1A).

**30.** Procédé selon l'une quelconque des revendications 21 à 29, dans lequel ladite au moins une force de fatigue est une force cyclique longitudinale appliquée à une de la première partie et de la seconde partie par rapport à l'autre de la première partie et de la seconde partie, ladite force cyclique longitudinale étant appliquée dans une direction sensiblement perpendiculaire audit plan de rupture prédéterminé (1E).

**31.** Procédé selon l'une quelconque des revendications 21 à 29, dans lequel ladite au moins une force de fatigue ($F_{3L}$, $F_{3R}$) est une force cyclique latérale appliquée à chacun des côtés opposés de la pièce, chacune desdites forces cycliques latérales étant appliquée le long d'une ligne sensiblement droite qui est sensiblement parallèle au plan de rupture prédéterminé et sensiblement perpendiculaire à l'axe central, où à tout instant, chacune des forces cycliques latérales a une magnitude sensiblement égale et agit dans une direction opposée l'une par rapport à l'autre.

FIG. 1

U = R = 0

U = 0

$U_x = 0$

FIG. 2

FIG. 5

FIG. 3

FIG. 4

FIG. 7

OPENING MODE     SLIDING MODE     TEARING MODE

MODE 1

MODE 2

MODE 3

FIG. 6